# EUROPEAN PATENT APPLICATION

(11) **EP 4 738 624 A1**
(43) Date of publication of application: **06.05.2026**
(21) Application number: 24844401.0
(22) Date of filing: 06.06.2024
(51) Int. Cl.: H01R 31/06, H01R 13/70, H01R 13/66, H01B 7/00

(54) **TERMINAL ASSEMBLY FOR SPLIT-TYPE SMART GLASSES, AND DATA CABLE**

(30) Priority: 21.07.2023 CN 202321933856 U
(71) Applicant: Hangzhou Lingban Technology Co., Ltd., Hangzhou, Zhejiang 310000 (CN)
(72) Inventor: ZHENG, Xiaohui, Hangzhou, Zhejiang 310000 (CN); LIU, Zhineng, Hangzhou, Zhejiang 310000 (CN); ZHANG, Le, Hangzhou, Zhejiang 310000 (CN); ZHOU, Sen, Hangzhou, Zhejiang 310000 (CN)
(74) Representative: Huang, Liwei
(86) International application number: PCT/CN2024/097660
(87) International publication number: WO 2025/020706

(57) **Abstract**

Provided are a terminal assembly for split smart glasses and a data cable. The terminal assembly for split smart glasses includes a terminal body, a signal converter, and at least one data cable. The terminal body includes a main control module, a switching module, a multimedia module, a communication module, and a terminal multimedia interface. The main control module and the terminal multimedia interface are both connected to the switching module. The signal converter includes a converter multimedia interface and a converter communication interface. The converter multimedia interface is in communication connection with the converter communication interface. One end of the data cable is connected to the signal converter. When the terminal body is connected to a multimedia device, the switching module is connected to the multimedia module. When the converter communication interface is connected to a pair of smart glasses, the terminal multimedia interface is connected to the converter multimedia interface, and the switching module is connected to the communication module. The terminal assembly can reduce a probability of damage to a terminal device.

## Description

### CROSS-REFERENCES TO RELATED APPLICATIONS

This application claims priority to Chinese Patent Application No. 202321933856.5, filed with the China National Intellectual Property Administration on July 21, 2023, which is incorporated herein by reference in its entirety.

### TECHNICAL FIELD

Embodiments of the present disclosure relate to the technical field of smart glasses, and specifically, to a terminal assembly for split smart glasses and a data cable.

### BACKGROUND

Smart glasses include integrated smart glasses and split smart glasses. A pair of split smart glasses includes a terminal device and a smart glasses body. The related terminal device is connected to the smart glasses body through a universal serial bus (USB) module, and for some displays each including a high definition multimedia interface (HDMI), the terminal device is connected to the display through an HDMI module.

However, when the terminal device is used, there are often the following technical problems:
Since the communication between the terminal device and the smart glasses body cannot be implemented when the terminal device is connected to the smart glasses body through an HDMI-to-TypeC converter, the terminal device needs to be provided with two interfaces (namely an HDMI and a USB interface) to implement the communication with the smart glasses body and the connection to the display. There are relatively many interfaces provided in the terminal device, so that there is a high probability of dust, sweat stains and other pollutants entering the terminal device, resulting in a high probability of damage to the terminal device.

The foregoing information disclosed in this background section is only for enhancing understanding of the background of the concept of the present disclosure, and therefore, the information may contain information that does not form the prior art that is known to a person of ordinary skill in the art in China.

### SUMMARY

The summary section of the present disclosure is intended to introduce concepts in a brief form, and the concepts are described in detail in the subsequent description of embodiments section. The summary section of the present disclosure is neither intended to identify key features or necessary features of the claimed technical solutions, nor intended to limit the scope of the claimed technical solutions.

Some embodiments of the present disclosure propose a terminal assembly for split smart glasses and a data cable, to solve the technical problems mentioned in the background section above.

In a first aspect, some embodiments of the present disclosure provide a terminal assembly for split smart glasses. The terminal assembly for split smart glasses includes a terminal body, a signal converter, and at least one data cable, where the terminal body includes a main control module, a switching module, a multimedia module, a communication module, and a terminal multimedia interface, where the main control module and the terminal multimedia interface are both connected to the switching module; the signal converter includes a converter chip, a converter multimedia interface, and a converter communication interface, and the converter multimedia interface is in communication connection with the converter communication interface; one end of each of the at least one data cable is connected to the signal converter; when the terminal body is connected to the multimedia device, the switching module is connected to the multimedia module; and when the conversion communication interface is connected to smart glasses, the terminal multimedia interface is connected to the converter multimedia interface, and the switching module is connected to the communication module.

Optionally, a multimedia pin set and a communication pin set are connected to the converter chip.

Optionally, the multimedia pin set includes an electronic control pin and a multifunctional pin, the communication pin set includes a universal serial bus positive pin and a universal serial bus negative pin, where the electronic control pin is connected to the universal serial bus positive pin, and the multifunctional pin is connected to the universal serial bus negative pin.

Optionally, the at least one data cable includes a data cable for connecting the converter multimedia interface, one end of the data cable for connecting the converter multimedia interface is connected to the multimedia pin set, and the other end of the data cable for connecting the converter multimedia interface is connected to the converter multimedia interface.

Optionally, the at least one data cable further includes a data cable for connecting the converter communication interface, one end of the data cable for connecting the converter communication interface is connected to the communication pin set, and the other end of the data cable for connecting the converter communication interface is connected to the converter communication interface.

Optionally, a diameter of each of the at least one data cable is less than or equal to a preset diameter.

Optionally, each of the at least one data cable includes coaxial cables and an electronic wire assembly.

Optionally, for each of the at least one data cable, the electronic wire assembly included in the data cable includes a first electronic wire group and a second electronic wire group.

Optionally, for each of the at least one data cable, the first electronic wire group included in the data cable includes a first data wire group and a power wire group, the first data wire group and the power wire group are twisted, the second electronic wire group included in the data cable includes a second data wire group, the second data wire group includes second data wires, and the second data wires are twisted with each other.

Optionally, for each of the at least one data cable, the first electronic wire group included in the data cable and the second electronic wire group included in the data cable are both wrapped with shielding layers.

In a second aspect, some embodiments of the present disclosure provide a data cable, applied to the terminal assembly for split smart glasses as described in the first aspect. The data cable includes an outer cover layer, a winding layer, and a cable core layer, where the winding layer is wound around an outer ring of the cable core layer, and the outer cover layer covers an outer ring of the winding layer; the cable core layer includes coaxial cables and an electronic wire assembly, and each of the coaxial cables has a diameter of 0.39 ± 0.05 mm; the electronic wire assembly includes a first electronic wire group and a second electronic wire group; the first electronic wire group includes a first power wire, a second power wire, and two first data wires that are twisted, where the first power wire has a wire core diameter of 0.32 ± 0.05 mm, the second power wire has a wire core diameter of 0.50 ± 0.05 mm, and each of the two first data wires has a wire core diameter of 0.30 ± 0.05 mm; the second electronic wire group is formed by twisting three second data wires, and each of the three second data wires has a wire core diameter of 0.32 ± 0.05 mm; and the first electronic wire group is used as a central part of the data cable, and the coaxial cables and the second electronic wire group form a wrapping part around the first electronic wire group.

Optionally, a sum of thicknesses of the winding layer and the outer cover layer ranges from 0.2 mm to 0.4 mm; a diameter of the cable core layer ranges from 2.0 mm to 2.2 mm; and a total diameter of the data cable ranges from 2.4 mm to 3.0 mm.

Optionally, outer rings of the first electronic wire group and the second electronic wire group are both provided with metal shielding layers.

Optionally, the first electronic wire group further includes a ground wire and an aramid reinforcement yarn, and the cable core layer includes at least one aramid reinforcement yarn.

The above-mentioned embodiments of the present disclosure have the following beneficial effects: through the terminal assembly for split smart glasses according to some embodiments of the present disclosure, the probability of damage to a terminal device can be reduced. Specifically, the reason for the high probability of damage to the related terminal device is as follows: Since the communication between the terminal device and the smart glasses body cannot be implemented when the terminal device is connected to the smart glasses body through an HDMI-to-TypeC converter, the terminal device needs to be provided with two interfaces (namely an HDMI and a USB interface) to implement the communication with the smart glasses body and the connection to a display. There are relatively many interfaces provided in the terminal device, so that there is a high probability of dust, sweat stains and other pollutants entering the terminal device, resulting in a high probability of damage to the terminal device. Based on this, a terminal assembly for split smart glasses according to some embodiments of the present disclosure includes a terminal body, a signal converter, and at least one data cable, where the terminal body includes a main control module, a switching module, a multimedia module, a communication module, and a terminal multimedia interface, where the main control module and the terminal multimedia interface are both connected to the switching module; the signal converter includes a converter chip, a converter multimedia interface, and a converter communication interface, and the converter multimedia interface is in communication connection with the converter communication interface; one end of each of the at least one data cable is connected to the signal converter; when the terminal body is connected to the multimedia device, the switching module is connected to the multimedia module; and when the conversion communication interface is connected to a pair of smart glasses, the terminal multimedia interface is connected to the converter multimedia interface, and the switching module is connected to the communication module. When the terminal body is connected to the multimedia device, the switching module is connected to the multimedia module, and therefore audio and video transmission between the multimedia module included in the terminal body and a display screen including an HDMI can be implemented. Since the switching module is connected to the communication module when the converter communication interface is connected to the smart glasses, communication between the terminal body and the smart glasses can be implemented through the converter. Therefore, according to the terminal assembly for split smart glasses, the smart glasses can be in USB communication with a terminal when connected to the terminal through an HDMI converter, thereby reducing the number of interfaces in the terminal, to reduce the probability of damage to the terminal device.

### BRIEF DESCRIPTION OF DRAWINGS

The above-mentioned and other features, advantages, and aspects of embodiments of the present disclosure become more apparent with reference to the accompanying drawings and the following description of embodiments. Throughout the accompanying drawings, the same or similar reference numerals denote the same or similar elements. It should be understood that the accompanying drawings are schematic, and components and elements are not necessarily drawn to scale.
FIG. 1 is a schematic structural diagram of a terminal assembly for split smart glasses according to some embodiments of the present disclosure.
FIG. 2 is a schematic structural diagram of a terminal body included in a terminal assembly for split smart glasses according to some embodiments of the present disclosure.
FIG. 3 is a schematic structural diagram of a signal converter included in a terminal assembly for split smart glasses according to some embodiments of the present disclosure.
FIG. 4 is a cross-sectional view of a data cable included in a terminal assembly for split smart glasses according to some embodiments of the present disclosure.

### DESCRIPTION OF EMBODIMENTS

The embodiments of the present disclosure are described in more detail below with reference to the accompanying drawings. Although some embodiments of the present disclosure are shown in the accompanying drawings, it should be understood that the present disclosure can be implemented in various forms and should not be construed as being limited to the embodiments set forth herein. On the contrary, these embodiments are provided for a more thorough and complete understanding of the present disclosure. It should be understood that the accompanying drawings and embodiments of the present disclosure are for illustrative purposes only and are not intended to limit the protection scope of the present disclosure.

In the description of the present disclosure, it should be noted that, unless otherwise explicitly specified and limited, the terms, "arrange" and "connect", should be broadly understood. For example, a connection may be a fixed connection, a detachable connection or an integral connection; may be a mechanical connection or an electrical connection; and may be a direct connection, an indirect connection through an intermediate medium, or internal communication between two components. For a person of ordinary skill in the art, the specific meanings of the above-mentioned terms in the present disclosure can be understood according to specific circumstances.

In addition, it should also be noted that, for ease of description, only parts related to the relevant disclosure are shown in the accompanying drawings. Embodiments of the present disclosure and features in the embodiments may be mutually combined in a case that no conflict occurs.

It should be noted that concepts such as "first" and "second" mentioned in the present disclosure are only used to distinguish between different apparatuses, modules, or units, and are not used to limit the sequence of functions performed by these apparatuses, modules, or units or interdependence.

It should be noted that the modifications of "a" and "a plurality of" mentioned in the present disclosure are schematic rather than limiting, and a person skilled in the art should understand that unless the context clearly indicates otherwise, they should be understood as "one or more".

The names of messages or information exchanged between a plurality of apparatuses in the implementations of the present disclosure are used for illustrative purposes only, and are not used to limit the scope of these messages or information.

The present disclosure is described in detail below with reference to the accompanying drawings and the embodiments.

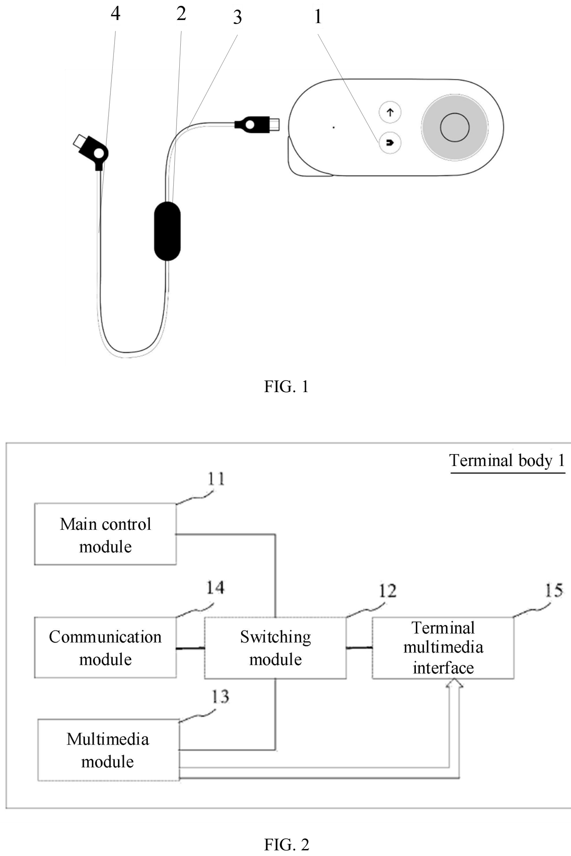

FIG. 1 is a schematic structural diagram of a terminal assembly for split smart glasses according to some embodiments of the present disclosure. The terminal assembly in FIG. 1 includes a terminal body 1, a signal converter 2, a data cable 3, and a data cable 4.

FIG. 2 is a schematic structural diagram of a terminal body included in a terminal assembly for split smart glasses according to some embodiments of the present disclosure. The terminal assembly in FIG. 2 includes a terminal body 1, and the terminal body 1 includes a main control module 11, a switching module 12, a multimedia module 13, a communication module 14, and a terminal multimedia interface 15.

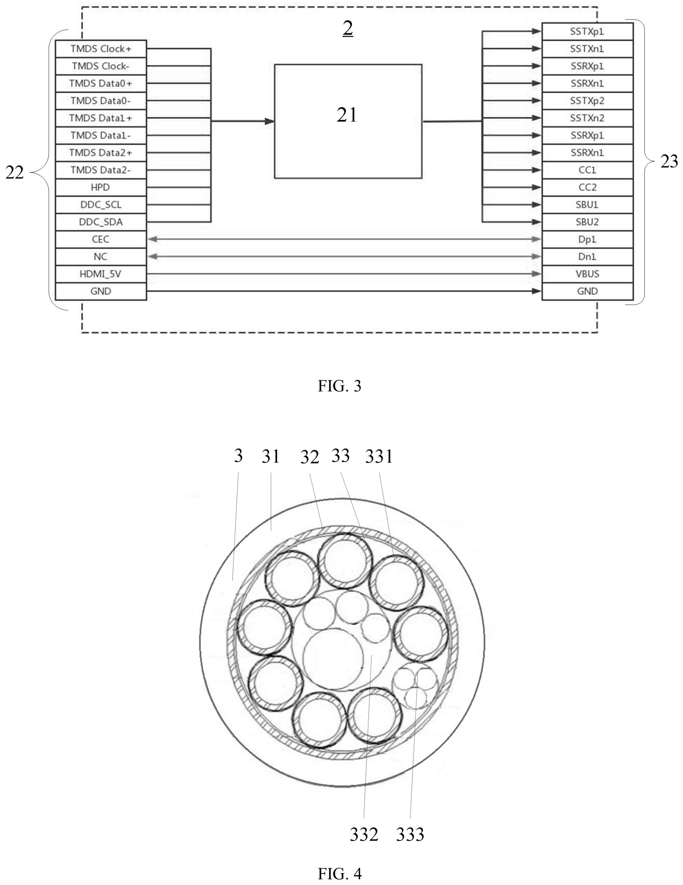

FIG. 3 is a schematic structural diagram of a signal converter included in a terminal assembly for split smart glasses according to some embodiments of the present disclosure. The terminal assembly in FIG. 3 includes a signal converter 2. The signal converter 2 includes a converter chip 21, a converter multimedia interface 22, and a converter communication interface 23.

In some embodiments, the terminal assembly for split smart glasses may include a terminal body 1, a signal converter 2, and at least one data cable (such as a data cable 3 and a data cable 4). The terminal body 1 may be a terminal device configured to process various information. The terminal body 1 may include a main control module 11, a switching module 12, a multimedia module 13, a communication module 14, and a terminal multimedia interface 15. The main control module 11 may be a module configured to execute a computer program and process received information. For example, the main control module 11 may include, but is not limited to, any of the following: a system on chip (SoC), a microcontroller unit (MCU), and a digital signal processor (DSP). The switching module 12 may be a component configured to switch and control on-off of a current. For example, the switching module 12 may be a switching chip. The multimedia module 13 may be a component arranged on a circuit board inside the terminal device and configured to receive and transmit a fully digitized video and sound. For example, the multimedia module 13 may be an HDMI. The communication module 14 may be a component arranged on the circuit board inside the terminal device and configured to transmit various data. For example, the communication module 14 may be a USB interface. The terminal multimedia interface 15 may be a component arranged outside the terminal device and configured to receive and transmit a fully digitized video and sound. For example, the terminal multimedia interface 15 may be an HDMI provided outside the terminal device. The main control module 11 and the terminal multimedia interface 15 may be both connected to the switching module 12. Specifically, the main control module 11 and the terminal multimedia interface 15 may be both electrically connected to the switching module 12 through wires.

In some embodiments, the signal converter 2 may include a converter chip 21, a converter multimedia interface 22, and a converter communication interface 23. The converter chip 21 may be an electronic component that converts an HDMI signal into a Displayport signal. For example, the converter chip 21 may be LT6711A. The converter multimedia interface 22 may be an HDMI provided in the signal converter 2. The converter communication interface 23 may be a TypeC interface provided in the signal converter 2. The converter multimedia interface 22 may be in communication connection with the converter communication interface 23. For example, an electronic control pin of the converter multimedia interface 22 may be connected to a universal serial bus positive pin of the converter communication interface 23. A multifunctional pin of the converter multimedia interface 22 may be connected to a universal serial bus negative pin of the converter communication interface 23. The electronic control pin may be a CEC pin. The universal serial bus positive pin may be a Dp1 pin. The multifunctional pin may be a Utility/HEAC+ pin. The universal serial bus negative pin may be a Dn1 pin. For another example, the electronic control pin of the converter multimedia interface 22 may be connected to the universal serial bus negative pin of the converter communication interface 23. The multifunctional pin of the converter multimedia interface 22 may be connected to a universal serial bus positive pin of the converter communication interface 23.

In some embodiments, one end of each of the at least one data cable may be connected to the signal converter 2. Specifically, one end of each data cable may be connected to each pin on the converter multimedia interface 22 or each pin on the converter communication interface 23 in the signal converter 2.

In some embodiments, when the terminal body 1 is connected to a multimedia device, the switching module 12 may be connected to the multimedia module 13. In practice, when the terminal body 1 reads extended display identification data (EDID) of a connected device and determines that the connected device is a multimedia device according to the EDID, the switching module 12 can switch to being connected to the multimedia module 13, to implement connection between the multimedia module 13 and the terminal multimedia interface 15. Herein, the converter communication interface 23 may be connected to the multimedia device through an HDMI data cable. When the converter communication interface 23 is connected to a pair of smart glasses, the terminal multimedia interface 15 may be connected to the converter multimedia interface 22. It may be understood that each pin on the terminal multimedia interface 15 may be correspondingly connected to one pin on the converter multimedia interface 22. As an example, a CEC pin on the terminal multimedia interface 15 may be correspondingly connected to the CEC pin on the converter multimedia interface 22. A pin on the terminal multimedia interface 15 may be correspondingly connected to the Utility/HEAC+ pin on the converter multimedia interface 22. The switching module 12 may be connected to the communication module 14. In practice, when it is determined that the connected device is a pair of smart glasses according to the EDID, the switching module 12 can switch to being connected to the communication module 14, to implement connection between the communication module 14 and the terminal multimedia interface 15. Herein, the converter communication interface 23 may be connected to the smart glasses through the at least one data cable. Therefore, when the terminal body 1 is connected to the multimedia device, the multimedia module 13 is connected to the terminal multimedia interface 15 through the switching module 12, so that video and audio transmission between the terminal body 1 and the multimedia device can be implemented. When the terminal body 1 is connected to the smart glasses, the communication module 14 is connected to the terminal multimedia interface 15 through the switching module 12, so that communication and video and audio transmission between the terminal body 1 and the smart glasses can be implemented.

Optionally, a multimedia pin set and a communication pin set may be connected to the converter chip 21. In an example, the signal converter 2 may further include a circuit board. The converter chip 21 may be disposed on the circuit board. The multimedia pin set and the communication pin set may be separately welded to the circuit board. The multimedia pin set and the communication pin set may be both connected to the converter chip 21 through wires.

Optionally, the multimedia pin set may include an electronic control pin and a multifunctional pin. The communication pin set may include a universal serial bus positive pin and a universal serial bus negative pin. The electronic control pin may be connected to the universal serial bus positive pin. The multifunctional pin may be connected to the universal serial bus negative pin.

Optionally, the at least one data cable may include a data cable for connecting the converter multimedia interface 22. One end of the data cable for connecting the converter multimedia interface 22 may be connected to the multimedia pin set. The other end of the data cable for connecting the converter multimedia interface 22 may be connected to the converter multimedia interface 22. It may be understood that the connection between the multimedia pin set and the converter multimedia interface 22 can be implemented through the data cable for connecting the converter multimedia interface 22. Therefore, a distance by which the converter multimedia interface is connected can be extended through the data cable in a case that the converter does not move.

Optionally, the at least one data cable may further include a data cable for connecting the converter communication interface 23. One end of the data cable for connecting the converter communication interface 23 may be connected to the communication pin set. The other end of the data cable for connecting the converter communication interface 23 may be connected to the converter communication interface 23. It may be understood that the connection between the communication pin set and the converter communication interface 23 can be implemented through the data cable for connecting the converter communication interface 23. Therefore, a distance by which the converter communication interface is connected can be extended through the data cable in a case that the converter does not move.

Optionally, a diameter of each of the at least one data cable may be less than or equal to a preset diameter. The preset diameter may be a diameter of a prearranged data cable. For example, the preset diameter may be 2.7 mm.

Optionally, each of the at least one data cable may include coaxial cables and an electronic wire assembly. The coaxial cables may be Mylar wires of various colors. A diameter of each of the coaxial cables may be 0.39 ± 0.05 mm. Specifically, the coaxial cables may include eight coaxial cables. In practice, each data cable can be formed by twisting the coaxial cable and the electronic wire assembly and then wrapping the same by an outer cover layer of the data cable.

Optionally, for each of the at least one data cable, the electronic wire assembly included in the data cable may include a first electronic wire group and a second electronic wire group. Twisted outer diameters of the first electronic wire group and the second electronic wire group may be different.

Optionally, for each of the at least one data cable, the first electronic wire group included in the data cable may include a first data wire group and a power wire group. The first data wire group and the power wire group may be twisted. In an example, the first electronic wire group may be an electronic wire group formed by twisting two data wires and two power wires. Wire core diameters of the two data wires may each be 0.30 ± 0.05 mm. A wire core diameter of one of the two power wires may be 0.32 ± 0.05 mm. A wire core diameter of the other power wire may be 0.50 ± 0.05 mm. The second electronic wire group included in the data cable may include a second data wire group. The second data wire group may include second data wires. The second data wires may be twisted with each other. In an example, the second electronic wire group may be an electronic wire group formed by twisting three data wires. A wire core diameter of each of the three data wires may be 0.32 ± 0.05 mm. The first electronic wire group can be used as a central part of the data cable. The coaxial cables and the second electronic wire group can form a wrapping part around the first electronic wire group.

Optionally, for each of the at least one data cable, the first electronic wire group included in the data cable and the second electronic wire group included in the data cable may be both wrapped with shielding layers. The shielding layers may each be a metal shielding layer.

The above-mentioned embodiments of the present disclosure have the following beneficial effects: through the terminal assembly for split smart glasses according to some embodiments of the present disclosure, the probability of damage to a terminal device can be reduced. Specifically, the reason for the high probability of damage to the related terminal device is as follows: Since the communication between the terminal device and the smart glasses body cannot be implemented when the terminal device is connected to the smart glasses body through an HDMI-to-TypeC converter, the terminal device needs to be provided with two interfaces (namely an HDMI and a USB interface) to implement the communication with the smart glasses body and the connection to a display. There are relatively many interfaces provided in the terminal device, so that there is a high probability of dust, sweat stains and other pollutants entering the terminal device, resulting in a high probability of damage to the terminal device. Based on this, a terminal assembly for split smart glasses according to some embodiments of the present disclosure includes a terminal body, a signal converter, and at least one data cable, where the terminal body includes a main control module, a switching module, a multimedia module, a communication module, and a terminal multimedia interface, where the main control module and the terminal multimedia interface are both connected to the switching module; the signal converter includes a converter chip, a converter multimedia interface, and a converter communication interface, and the converter multimedia interface is in communication connection with the converter communication interface; one end of each of the at least one data cable is connected to the signal converter; when the terminal body is connected to the multimedia device, the switching module is connected to the multimedia module; and when the conversion communication interface is connected to a pair of smart glasses, the terminal multimedia interface is connected to the converter multimedia interface, and the switching module is connected to the communication module. When the terminal body is connected to the multimedia device, the switching module is connected to the multimedia module, and therefore audio and video transmission between the multimedia module included in the terminal body and a display screen including an HDMI can be implemented. Since the switching module is connected to the communication module when the converter communication interface is connected to the smart glasses, communication between the terminal body and the smart glasses can be implemented through the converter. Therefore, according to the terminal assembly for split smart glasses, the smart glasses can be in USB communication with a terminal when connected to the terminal through an HDMI converter, thereby reducing the number of interfaces in the terminal, to reduce the probability of damage to the terminal device.

FIG. 4 is a cross-sectional view of a data cable according to some embodiments of the present disclosure. The data cable in FIG. 4 includes a data cable 3. The data cable 3 includes an outer cover layer 31, a winding layer 32, and a cable core layer 33. The cable core layer 33 includes a coaxial cable 331, a first electronic wire group 332, and a second electronic wire group 333.

In some embodiments, the data cable 3 may include an outer cover layer 31, a winding layer 32, and a cable core layer 33. The outer cover layer 31 may be an outermost layer of the data cable 3, which is configured to wrap inner wires to prevent damage. Herein, a specific material of the outer cover layer 31 is not limited. For example, the outer cover layer 31 is made of a material which may be, but is limited to, any of the following: a thermoplastic elastomer (TPE), polyvinyl chloride (PVC), and polyurethane (PU). The winding layer 32 may be a mesh woven from tinned copper wires. The winding layer 32 may be wound around an outer ring of the cable core layer 33. The outer cover layer 31 may be wrapped on an outer ring of the winding layer 32. The cable core layer 33 may include coaxial cables and an electronic wire assembly. Specifically, the coaxial cables may include eight coaxial cables. The coaxial cables may each be a Mylar wire. A cable core diameter of each coaxial cable may be 0.39 ± 0.05 mm.

In some embodiments, each coaxial cable can be obtained by twisting a plurality of metal wires. In one or more embodiments, each coaxial cable includes an insulating layer for wrapping a plurality of metal wires. A diameter of each metal wire may be 0.05 ± 0.008 mm. A twisted outer diameter of a coaxial cable formed by twisting 7 metal wires may be 0.15 mm. The insulating layer included in each coaxial cable may be made of a perfluoroethylene propylene copolymer. The insulating layer included in each coaxial cable has a thickness of 0.12 mm.

In some embodiments, the electronic wire assembly may include a first electronic wire group 332 and a second electronic wire group 333. The first electronic wire group 332 may include a first power wire, a second power wire, and two first data wire that are twisted. A wire core diameter of the first power wire may be 0.32 ± 0.05 mm.

In some embodiments, the first power wire may be obtained by twisting a plurality of metal wires. The first power wire includes an insulating layer for wrapping a plurality of metal wires. In one or more embodiments, a diameter of each metal wire may be 0.06 ± 0.008 mm. A twisted outer diameter of a first power wire formed by twisting 7 metal wires may be 0.18 mm. The insulating layer included in the first power wire may be made of a perfluoroethylene propylene copolymer. The insulating layer included in the first power wire has a thickness of 0.07 mm.

In some embodiments, a wire core diameter of the second power wire may be 0.50 ± 0.05 mm. The second power wire may be obtained by twisting a plurality of metal wires. The second power wire includes an insulating layer for wrapping a plurality of metal wires. In one or more embodiments, a diameter of each metal wire may be 0.06 ± 0.008 mm. A twisted outer diameter of a second power wire formed by twisting 19 metal wires may be 0.30 mm. The insulating layer included in the second power wire may be made of a perfluoroethylene propylene copolymer.

In some embodiments, the insulating layer included in the second power wire has a thickness of 0.10 mm. A wire core diameter of each of the two first data wires may be 0.30 ± 0.05 mm. The data wire may be obtained by twisting a plurality of metal wires. Each first data wire includes an insulating layer for wrapping 3 wires. In one or more embodiments, a diameter of each metal wire may be 0.06 ± 0.008 mm. A twisted outer diameter of a first data wire formed by twisting 7 metal wires may be 0.18 mm. The insulating layer included in each first data wire may be made of a perfluoroethylene propylene copolymer. The insulating layer included in each first data wire has a thickness of 0.06 mm.

In some embodiments, the second electronic wire group 333 may be formed by twisting three second data wires. A wire core diameter of each of the three second data wires may be 0.32 ± 0.05 mm. Each second data wire may be obtained by twisting a plurality of metal wires. Each second data wire includes an insulating layer for wrapping a plurality of metal wires. A diameter of each metal wire may be 0.06 ± 0.008 mm. In one or more embodiments, a twisted outer diameter of a second data wire formed by twisting 7 metal wires may be 0.18 mm. The insulating layer included in each second data wire may be made of a perfluoroethylene propylene copolymer. The insulating layer included in each second data wire has a thickness of 0.07 mm.

In some embodiments, the first electronic wire group 332 can be used as a central part of the data cable 3. The coaxial cables and the second electronic wire group 333 can form a wrapping part around the first electronic wire group 332. Specifically, as shown in FIG. 4, the coaxial cables and the second electronic wire group 333 are located at the outermost part to wrap the first electronic wire group 332.

Optionally, a sum of thicknesses of the winding layer 32 and the outer cover layer 31 may range from 0.2 mm to 0.4 mm. A diameter of the cable core layer 33 may range from 2.0 mm to 2.2 mm. Through the winding mode and wire selection of one or more of the above-mentioned embodiments, while transmission performance and an anti-interference capability of the data cable 3 are ensured, the total diameter of the data cable 3 may range from 2.4 mm to 3.0 mm, preferably 2.6 mm to 2.8 mm, while the thickness of a conventional similar data cable is usually in a limit range of 3.5 mm to 3.8 mm. Therefore, through the data cable of one or more embodiments of the present disclosure, portability of the data cable and comfort of a user during use can be improved while performance of the data cable is maintained.

Optionally, outer rings of the first electronic wire group 332 and the second electronic wire group 333 may be both provided with metal shielding layers. In an example, the metal shielding layers may be made of aluminum foil. Specifically, the outer ring of the first electronic wire group 332 may be wrapped with a metal shielding layer. The outer ring of the second electronic wire group 333 may also be wrapped with a metal shielding layer.

Optionally, the first electronic wire group 332 may further include a ground wire and an aramid reinforcement yarn. The ground wire may be configured to connect to the earth, a shell or a wire with a zero reference potential. The aramid reinforcement yarn may be a thread made of high-density fibers. The ground wire and the aramid reinforcement yarn may be twisted with the first power wire, the second power wire, and the two first data wires to obtain the first electronic wire group 332. The cable core layer 33 may include at least one aramid reinforcement yarn. Specifically, the cable core layer 33 may include three aramid reinforcement yarns. The at least one aramid reinforcement yarn may be twisted together with the coaxial cable, the first electronic wire group 332, and the second electronic wire group 333 to form the cable core layer 33. Therefore, pull resistance of the data cable can be improved by arranging the aramid reinforcement yarn and the ground wire.

Therefore, by selecting a cable core thinner than a conventional cable core, the data cable can have a smaller diameter and a lighter weight on the basis of meeting audio and video transmission bandwidth requirements. Moreover, the first electronic wire group and the second electronic wire group are both wrapped with shielding layers, so that anti-interference performance of the data cable can be improved.

The above-mentioned descriptions are merely of some preferred embodiments of the present disclosure and an illustration of the applied technical principles. A person skilled in the art should understand that the scope of disclosure involved in the embodiments of the present disclosure is not limited to the technical solutions formed by specific combinations of the above-mentioned technical features, and shall also cover other technical solutions formed by any combination of the above-mentioned technical features or equivalent features thereof without departing from the above-mentioned concept of disclosure, for example, a technical solution formed by mutual replacement between the above-mentioned features and technical features with similar functions disclosed (but not limited thereto) in the embodiments of the present disclosure.

## Claims

1. A terminal assembly for split smart glasses, comprising a terminal body, a signal converter, and at least one data cable, wherein
the terminal body comprises a main control module, a switching module, a multimedia module, a communication module, and a terminal multimedia interface, wherein the main control module and the terminal multimedia interface are both connected to the switching module;
the signal converter comprises a converter chip, a converter multimedia interface, and a converter communication interface, and the converter multimedia interface is in communication connection with the converter communication interface;
one end of each of the at least one data cable is connected to the signal converter; and
when the terminal body is connected to a multimedia device, the switching module is connected to the multimedia module, and when the converter communication interface is connected to a pair of smart glasses, the terminal multimedia interface is connected to the converter multimedia interface, and the switching module is connected to the communication module.

2. The terminal assembly for split smart glasses according to claim 1, wherein a multimedia pin set and a communication pin set are connected to the converter chip.

3. The terminal assembly for split smart glasses according to claim 2, wherein the multimedia pin set comprises an electronic control pin and a multifunctional pin, the communication pin set comprises a universal serial bus positive pin and a universal serial bus negative pin, wherein the electronic control pin is connected to the universal serial bus positive pin, and the multifunctional pin is connected to the universal serial bus negative pin.

4. The terminal assembly for split smart glasses according to claim 2, wherein the at least one data cable comprises a data cable for connecting the converter multimedia interface, one end of the data cable for connecting the converter multimedia interface is connected to the multimedia pin set, and the other end of the data cable for connecting the converter multimedia interface is connected to the converter multimedia interface.

5. The terminal assembly for split smart glasses according to any one of claims 2 to 4, wherein the at least one data cable further comprises a data cable for connecting the converter communication interface, one end of the data cable for connecting the converter communication interface is connected to the communication pin set, and the other end of the data cable for connecting the converter communication interface is connected to the converter communication interface.

6. The terminal assembly for split smart glasses according to claim 1, wherein a diameter of each of the at least one data cable is less than or equal to a preset diameter.

7. The terminal assembly for split smart glasses according to claim 1, wherein each of the at least one data cable comprises coaxial cables and an electronic wire assembly.

8. The terminal assembly for split smart glasses according to claim 7, wherein for each of the at least one data cable, the electronic wire assembly comprised in the data cable comprises a first electronic wire group and a second electronic wire group.

9. The terminal assembly for split smart glasses according to claim 8, wherein for each of the at least one data cable, the first electronic wire group comprised in the data cable comprises a first data wire group and a power wire group, the first data wire group and the power wire group are twisted, the second electronic wire group comprised in the data cable comprises a second data wire group, the second data wire group comprises second data wires, and the second data wires are twisted with each other.

10. The terminal assembly for split smart glasses according to claim 8, wherein for each of the at least one data cable, the first electronic wire group comprised in the data cable and the second electronic wire group comprised in the data cable are both wrapped with shielding layers.

11. A data cable, applied to the terminal assembly for split smart glasses according to one of claims 1 to 10, comprising an outer cover layer, a winding layer, and a cable core layer, wherein
the winding layer is wound around an outer ring of the cable core layer, and the outer cover layer covers an outer ring of the winding layer;
the cable core layer comprises coaxial cables and an electronic wire assembly, and each of the coaxial cables has a diameter of 0.39 ± 0.05 mm;
the electronic wire assembly comprises a first electronic wire group and a second electronic wire group;
the first electronic wire group comprises a first power wire, a second power wire, and two first data wires that are twisted, wherein the first power wire has a wire core diameter of 0.32 ± 0.05 mm, the second power wire has a wire core diameter of 0.50 ± 0.05 mm, and each of the two first data wires has a wire core diameter of 0.30 ± 0.05 mm;
the second electronic wire group is formed by twisting three second data wires, and each of the three second data wires has a wire core diameter of 0.32 ± 0.05 mm; and
the first electronic wire group is used as a central part of the data cable, and the coaxial cables and the second electronic wire group form a wrapping part around the first electronic wire group.

12. The data cable according to claim 11, wherein a sum of thicknesses of the winding layer and the outer cover layer ranges from 0.2 mm to 0.4 mm; a diameter of the cable core layer ranges from 2.0 mm to 2.2 mm; and a total diameter of the data cable ranges from 2.4 mm to 3.0 mm.

13. The data cable according to claim 11, wherein outer rings of the first electronic wire group and the second electronic wire group are both provided with metal shielding layers.

14. The data cable according to one of claims 11 to 13, wherein the first electronic wire group further comprises a ground wire and an aramid reinforcement yarn, and the cable core layer comprises at least one aramid reinforcement yarn.
